# EUROPEAN PATENT SPECIFICATION

(11) **EP 0 668 312 B1**
(45) Date of publication and mention of the grant of the patent: **24.05.2000**
(21) Application number: 95300677.2
(22) Date of filing: 03.02.1995
(51) Int. Cl.: C08J 11/06

(54) **Recycling methods of resin compositions**
Wiederverwendungsverfahren von Harzmischungen
Procédé de recyclage de compositions de résines

(30) Priority: 17.02.1994 JP 4174294
(43) Date of publication of application: 23.08.1995
(73) Proprietor: GENERAL ELECTRIC COMPANY, Schenectady, NY 12345 (US)
(72) Inventor: Kubo, Hiroshi, Moka City, Tochigi Prefecture (JP); Ishida, Hiromi, Moka City, Tochigi Prefecture (JP); Ohtomo, Takashi, Utsunomiya City, Tochigi Prefecture (JP); Kabaya, Hidekazu, Moka City, Tochigi Prefecture (JP)
(74) Representative: Szary, Anne Catherine, Dr.

(56) References cited:
- EP-A- 0 270 247
- EP-A- 0 295 103
- EP-A- 0 308 671
- EP-A- 0 498 284
- EP-A- 0 549 268
- GB-A- 2 271 775
- PATENT ABSTRACTS OF JAPAN vol. 018, no. 114 (C-1171) 24 February 1994 & JP-A-05 306 365 (SUMITOMO CHEM. CO. LTD.) 19 November 1993

## Description

### Detailed explanation of the invention

### Industrial application field

The present invention pertains to a recycling method for a molded material having a coated film (referred to as painted film in some cases) comprised of polyphenylene ether resins (referred to as PPE in some cases hereinafter) and polyamide resins (referred to as PA in some cases hereinafter), the recycled resin composition produced from said method, and the auxiliary recycling composition used in said method.

### Prior art and problems

Thermoplastic resin compositions comprised of PPE resins and PA resins have high heat resistance, moldability and organic solvent resistance. A resin composition produced by further adding a rubber-like polymer to said material exhibits high impact resistance, and is widely used for automobile parts, electrical and electronic parts, machine parts, etc. In particular, on-line coating is possible; therefore, it is actively used for exterior parts of automobiles For example, it is used in practice for exterior parts such as wheel covers, bumpers, and exterior panels such as fenders.

Meanwhile, from the standpoint of an effective use of resources and environmental protection, the demand for recycling of such plastic materials is on the increase. The movement is to use natural resources more effectively thorough recycling. Hot-melting of the above-mentioned thermoplastic resin compositions is possible; therefore, recycling of defective products and used products is practiced.

However, in molded materials where a coating is applied to the surface, recycling is hardly ever done, and the majority of these parts are scrapped. This is because the coating film component is mixed in the products produced by recycling, which leads to significant deterioration in the properties, or poor coated surface appearance when the recycled molding is coated.

In order to use the coated resin molding a second time, a method in which removal of the coated film is done by physical or chemical means so that the material can be reused, has been examined. However, removal of the painted film on the molded material after baking is very difficult and is not cost effective; therefore, it is not done in practice.

Also, a method in which the pulverized resin molded material is melted during the recycling process, and the painted film included is removed by a metal mesh or filter, is known. In the above-mentioned method, the particles of painted film that are included are physically removed to the degree possible; therefore, it is necessary to maintain the diameter of the particles of painted film as large as possible. However, clogging of the mesh or filter occurs frequently in this case, and productivity suffers; furthermore, disposal of the particles collected produces an environmental pollution problem; therefore, it has not been done in practice.

Based on this background, the objective of the present invention is to provide, easily and without polluting the environment, a method of manufacturing a recycled resin composition with high mechanical strength, especially, impact resistance and tensile strength of the initial material through recycling of molded materials with a film coating comprised of PPE/PA type resin compositions.

### Means to solve the problem

The inventors carried out research into methods of recycling coated moldings having PPE/PA resin composition, and as a result, discovered that a recycled resin composition that retains the initial superior properties of the PPE/PA resin composition can be produced when an auxiliary recycling composition with a specific makeup is mixed with the material and hot-melt mixing is carried out, and the result is the present invention.

Thus, the present invention provides a method of manufacturing a recycled resin composition, in which an auxiliary recycling composition comprised of (A) 10-80 parts by weight of a polyphenylene ether resin and (B) 90-20 parts by weight of polyamide resin having greater than 0.05 mEq/g of end amino group, and containing (C) 25-75 parts by weight of rubber-like polymer for 100 parts by weight of the sum of (A) and (B) is mixed with the above-mentioned pulverized molded material having a coated film and subjected to hot-melt mixing, in which said molded materials has a coated film comprised of a resin composition containing a polyphenylene ether resin and a polyamide type resin.

Furthermore, the present invention is to provide a recycled composition produced by the above-mentioned method.

In addition, the present invention is to provide the auxiliary recycling composition used in the above-mentioned method.

First, the method of the present invention is explained. The molded material which the method of the present invention is to be applied to is a resin composition containing a PPE resin and PA resin, the surface of which is coated. Said resin composition is a known material, and those used for automobile parts, electrical and electronic parts, and machine parts, etc., can be applied. For PPE resin and PA resin, conventional standard materials commonly used in the field can be used effectively, for example, those listed as PPE resins and PA resins for the auxiliary recycling composition described below can be mentioned. The mixing ratio of the two is not limited, and the mixing ratio used for the above-mentioned standard resin composition (for example, PA 90-20 parts by weight for 10-80 parts by weight of PPE) can be used. Furthermore, different resin components (for example, styrene resins, polyester resins, ABS resins, polycarbonate resins, etc.), standard additives, for example, inorganic fillers, metal foils for metallic coating, flame retardants, stabilizers, etc., may be further included in said resin composition. In this case, the coated film (painted film) is a film coating provided on the surface of the resin mold, cured and dried by a conventional method such as baking or use of a catalyst, and is a film that is firmly bonded to the surface of the molded part. Coating of the surface of the molded part may be carried out by known methods (for example, spraying, roller coating, electrostatic coating, etc.), and type of coated film is not especially limited. For example, coated films of melamine alkyd resin paints, thermosetting acrylic resin paints, melamine polyester resin paints, etc., can be mentioned. The thickness of the coated film is not especially limited, but in general, it is 2 µm to 1 mm. Furthermore, a primer coating or middle coating may be provided as well.

The auxiliary recycling composition used in the method of the present invention includes (A) 10-80 parts by weight of PPE resin, (B) 90-20 parts by weight of PA resin with greater than 0.05 mEq of end amino group, and (C) 25-75 parts by weight of elastomer for 100 parts by weight of the sum of (A) and (B).

In the auxiliary recycling composition, conventional material can be used for the PPE resin component (A). "PPE resin" is the general term for the polymer shown in general formula (chemical formula 1): 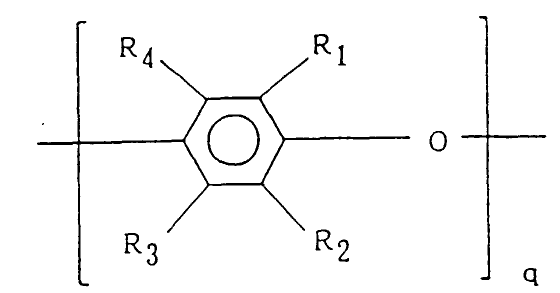 (In the formula, R₁, R₂, R₃, and R₄ are each a hydrogen atom, a halogen atom, an alkyl group, an alkoxy group, or a univalent substituent selected from haloalkyl groups or haloalkoxy groups having at least two carbon atoms between the halogen atom and the phenyl ring and that do not include tertiary α-carbons, and q is an integer that refers to the polymerization degree) and one type of the polymer shown in the above-mentioned general formula can be used or a copolymer made of a combination of two or more of said polymers can be used.

The method of manufacturing the PPE is not especially limited, and the processes used for phenols described in the specifications of United States Patent Nos. 3,306,874, 3,257,357, and 3,257,358 can be used. For the above-mentioned phenols, 2,6-dimethylphenol, 2,6-diethylphenol, 2,6-dibutylphenol, 2,6-dilaurylphenol, 2,6-dipropylphenol, 2,6-diphenylphenol, 2-methyl-6-ethylphenol, 2-methyl-6-cyclohexylphenol, 2-methyl-6-tolylphenol, 2-methyl-6-methoxyphenol, 2-methyl-6-butylphenol, 2,6-dimethoxyphenol, 2,3,6-trimethylphenol, 2,3,5,6-tetramethylphenol, 2,6-diethoxyphenol, etc., are included, but the method is not limited to these. A reaction may be carried out for one of these to produce the corresponding homopolymer, or a reaction may be carried out for two or more of these to produce the corresponding copolymer having different units included in the above-mentioned formula.

In preferable specific examples, R₁ and R₂ are alkyl groups with 1-4 carbons, and R₃ and R₄ are either hydrogen atoms or alkyl groups with 1-4 carbons. For example, poly(2,6-dimethyl-1,4-phenylene)ether, poly(2,6-diethyl-1,4-phenylene)ether, poly(2-methyl-6-ethyl-1,4-phenylene)ether, poly(2-methyl-6-propyl-1,4-phenylene)ether, poly(2,6-dipropyl-1,4-phenylene)ether, etc., can be mentioned. Furthermore, for PPE copolymers, copolymers containing an alkyl-3-substituted phenol, for example, 2,3,6-trimethylphenol, in the repeating unit of the above-mentioned polyphenylene ether can be mentioned.

Furthermore, copolymers of PPE grafted with a styrene compound may also be used. For styrene grafted polyphenylene ether compounds, copolymers produced by the graft polymerization of the above-mentioned PPE with a styrene compound, for example, styrene, α-methylstyrene, vinyltoluene, and chlorostyrene, can be mentioned.

In the present invention, in order to promote solubility between the PPE and PA, a part or all of the above-mentioned PPE may be substituted with a PPE in which the end of PPE is modified with a group capable of reacting with an amino group, for example, an epoxy group, carboxyl group, acid anhydride group, etc. The epoxidation, carboxylation, or acid anhydride treatment of the end group of the PPE can be carried out by conventional methods.

Epoxidation of the end group is described in Japanese Kokai Patent Application No. Sho 63[1988]-125525, etc. The end epoxidized PPE can be produced by bringing the PPE in contact with a compound having an epoxy group under heat. For the compound having an epoxy group, an epoxy compound having a halogen group on one end or an epoxy compound having an epoxy group on both ends is suitable. In specific terms, epichlorohydrin, 2-methylepichlorohydrin, etc., can be mentioned as an especially suitable one-end-epoxidized compound, and 2,2-bis(4-glycidylphenyl ether)propane epoxy resin, etc., can be mentioned as an especially suitable compound with both ends epoxidized. From the standpoint of controlling blocking among PPEs, one-end epoxidized compounds are especially suitable.

Carboxylation and acid anhydride treatment for the end group is described in Japanese Tokuhyo Patent Application No. Sho 62[1987]-500456, etc., and the end-carboxylated or acid-anhydride-treated PPE can be produced by a reaction of an acid chloride having a carboxyl group or an acid anhydride group, for example, trimellitic acid chloride anhydride and PPE.

In the above-mentioned PPE with a modified end group, it is not necessary for all of the end groups in the PPE to be modified, and those containing less than 70 wt% of the unmodified end group for the total amount of PPE of the component (A) are preferable.

The polyamide resin of the component (B) used in the present invention is one having an amide bond (-CO-NH-) in the main chain of the polymer, and is one capable of hot-melt processing. For typical examples, nylon 4, nylon 6, nylon 12, nylon 6,6, nylon 4,6, nylon 6,10, nylon 6,12, nylon 6,T (hexamethylenediamine/terephthalic acid), nylon MXD, 6 (m-xylylenediamine/adipic acid), nylon 6,6T (ε-caprolactam/hexamethylenediamine/terephthalic acid), nylon 66,6T (hexamethylenediamine/adipic acid/terephthalic acid), nylon 6T,6I (hexamethylenediamine/terephthalic acid/isophthalic acid), blend of nylon 6 and nylon 66, a polyamide made of terephthalic acid and trimethylhexamethylenediamine, a polyamide made of adipic acid, azelaic acid, and 2,2-bis(p-aminocyclohexyl)propane, a polyamide from terephthalic acid and 4,4-diaminodicyclohexylmethane, and copolymers of the above-mentioned nylons, and blends of these materials can be mentioned, but it is not limited to these materials.

For the auxiliary recycling composition, it is necessary for the above-mentioned polyamide resin to have greater than 0.05 mEq of end amino groups, and greater than 0.07 mEq is especially desirable. When the amount of the end amino group in the polyamide resin is less than the above-mentioned ratio, the impact resistance and resilience of the resin composition produced is inadequate.

Adjustment of the amount of the end amino group of the polyamide resin can be made by adding an excess amount of a compound capable of reacting with the carboxyl group (diamine, for example) at the time of polymerization of the polyamide resin.

For the above-mentioned (A) and (B), 90-20 parts by weight of (B) are added for 10-80 parts by weight of (A), and an addition of 85-30 parts by weight of (B) for 15-70 parts by weight of (A) is especially suitable. When the mixing ratio of (A) is too low, or the mixing ratio of (B) is too high, the heat resistance of the auxiliary recycling composition is reduced and the dimensional stability becomes poor; on the other hand, when the mixing ratio of the (A) is too high, or the mixing ratio of (B) is too low, the moldability of the auxiliary recycling composition becomes poor.

The elastomer (C) included in the auxiliary recycling composition, natural and synthetic polymer materials that remain elastic at room temperature are used and are selected from natural rubbers, butadiene polymers, hydroxy or carboxy end- modified polybutadiene, styreneisoprene copolymers, partially hydrogenated styreneisoprene block copolymer, butadienestyrene copolymers, partially hydrogenated styrenebutadiene block copolymer, isoprene polymers, chlorobutadiene polymers, butadieneacrylonitrile copolymers, isobutylene polymers, isobutylenebutadiene copolymers, isobutyleneisoprene copolymers, acrylate polymers, ethylenepropylene copolymers, ethylenepropylenediene copolymers, polysulfide rubbers, polyurethane rubbers and polyether rubbers.

The above-mentioned elastomers may be produced by using any polymerization method (for example, emulsion polymerization, solution polymerization, etc.) with any catalyst (for example, peroxides, trialkylammonium, lithium halide, nickel catalyst, etc.). Furthermore, those with various degrees of crosslinking, those with various ratios of microstructures (for example, cis structure, trans structure, vinyl group, etc.), or those containing different rubber grain diameters can be used. For copolymers, random copolymers, block copolymers, graft copolymers, and all types of copolymers can be used. Among those described above, a saturated rubber-like polymer such as hydrogenated SIS and hydrogenated SBS, are especially desirable.

In the auxiliary recycling composition, 25-75 parts by weight of the above-mentioned (C) elastomer are included for 100 parts by weight of the sum of (A) and (B), and an amount of 30-70 parts by weight is especially desirable. When the amount of (C) is less than the range described above, the impact resistance of the auxiliary recycling composition is inadequate, and when greater than the range described above, the rigidity and heat resistance of the auxiliary recycling composition become poor.

In order to promote solubility of the components (A) and (B), the auxiliary recycling composition may further include a solubilizer component (D). For solubilizers, those commonly used for PPE and polyamide can be used, for example, citric acid, malic acid, agaricic acid, and derivatives thereof.

The above-mentioned citric acid, malic acid, agaricic acid, and derivatives thereof are described in Japanese Tokuhyo Patent Application No. Sho 61[1986]-502195, and all compounds shown in the general formula in said publication can be used in the present invention. For derivatives, ester compounds, amide compounds, anhydrides, hydrates, and salts, etc., can be mentioned. For acid ester compounds, an acetyl ester, a mono- or distearyl ester of citric acid can be mentioned. For acid amide compounds, N,N'-diethylamide, N,N'-dipropylamide, N-phenylamide, N-dedecylamide, N,N'-didodecylamide, or N-dodecylamide of malic acid, etc., can be mentioned. For salts, calcium malate, calcium citrate, potassium malate, potassium citrate, etc., can be mentioned.

Further examples of the solubilizer component (D) are maleic anhydride, maleic acid, fumaric acid, maleimide, maleic acid hydrazide, reaction product of maleic anhydride and diamine, for example, those having a structure shown in the formula (Chemical formula 2) below: 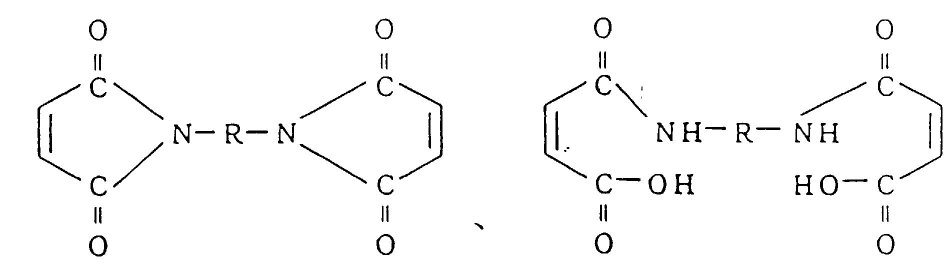 (where R is an aliphatic group or an aromatic group), natural fats and oils such as methyl Nadic anhydride, dichloromaleic anhydride, maleic acid amide, soybean oil, tung oil, castor oil, linseed oil, hempseed oil, cotton seed oil, sesame oil, rapeseed oil, peanut oil, camellia oil, olive oil, coconut oil, and sardine oil, epoxidized natural fats and oils such as epoxidized soybean oil, unsaturated carboxylic acids such as acrylic acid, butenoic acid, crotonic acid, vinyl acetic acid, methacrylic acid, pentenoic acid, angelicic acid, tiglic acid, 2-pentenoic acid, 3-pentenoic acid, α-ethylacrylic acid, β-methyl crotonic acid, 4-pentenoic acid, 2-hexenoic acid, 2-methyl-2-pentenoic acid, 3-methyl-2-pentenoic acid, α-ethyl crotonic acid, 2,2-dimethyl-3-butenoic acid, 2-heptenoic acid, 2-octenoic acid, 4-decenoic acid, 9-undecenoic acid, 10-undecenoic acid, 4-dodecenoic acid, 5-dodecenoic acid, 4-tetradecenoic acid, 9-tetradecenoic acid, 9-hexadecenoic acid, 2-octadecenoic acid, 9-octadecenoic acid, eicosanoic acid, docosenoic acid, erucic acid, tetracosanoic acid, mycolipemic acid, 2,4-pentadienoic acid, 2,4-hexadienoic acid, diallylacetic acid, geranic acid, 2,4-decadienoic acid, 2,4-dodecadienoic acid, 9,12-hexadecadienoic acid, 9,12-octadienoic acid, hexadecatrienoic acid, linolic acid, linolenic acid, octadecatrienoic acid, icosadienoic acid, icosatrienoic acid, icosatetraenoic acid, recinoleic acid, eleostearic acid, oleic acid, icosapentaenic acid, erucic acid, docosadienic acid, docosapentaenic acid, tetracosanoic acid, hexacosanoic acid, hexacosadienoic acid, octadosanoic acid, and triacontenoir acid;, and esters, acid amides, or acid anhydrides of the above-mentioned unsaturated carboxylic acids, or unsaturated alcohols such as allyl alcohol, crotyl alcohol, methyl vinyl carbinol, allyl carbinol, methyl propenyl carbinol, 4-penten-1-ol, 10-undecen-1-ol, propaegyl alcohol, 1,4-pentadien-3-ol, 1,4-hexadien-3-ol, 3,5-hexadien-2-ol, 2,4-hexadien-1-ol, alcohol shown in general formula CₙH₂ₙ₋₅OH, CₙH₂ₙ₋₇OH, CₙH₂ₙ₋₉OH (where n is an integer of a positive number), 3-butene-1,2-diol, 2,5-dimethyl-3-hexene-2,5-diol, 1,5-hexadiene-3,4-diol, and 2,6-octadiene-4,5-diol, and unsaturated amines in which the OH group in the above-mentioned unsaturated alcohols is substituted by-NH₂ group.

Furthermore, for different examples of solubilizers, unsaturated monomers containing an epoxy group and/or oxazolynyl group can be mentioned.

For unsaturated monomers containing an epoxy group or oxazolynyl group, those shown below can be mentioned.

First, as suitable unsaturated monomers containing an epoxy group, glycidyl methacrylate (referred to as GMA hereinafter), glycidyl acrylate, vinyl glycidyl ether, glycidyl ether of hydroxyalkyl (meth)acrylate, glycidyl ether of polyalkylene glycol (meth)acrylate, glycidyl itaconate, etc., can be mentioned.

For suitable unsaturated monomers containing an oxazolynyl group, those shown in general formula (Chemical formula 3) below: 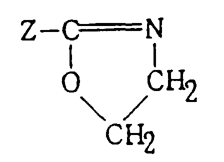 and containing a double bond shown in Z that can be polymerized can be mentioned. For suitable substituents Z, the following can be mentioned.

CH₂ =CR-,

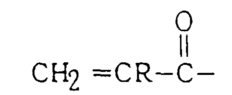

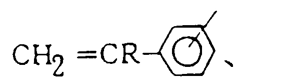

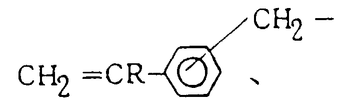

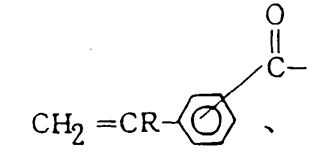

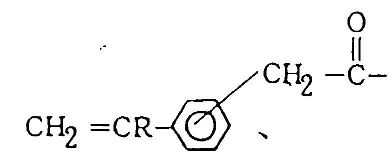

and

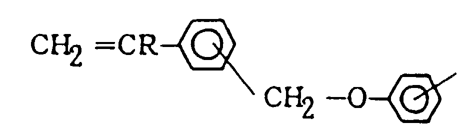

In the above-mentioned formulas, R is a hydrogen atom or an alkyl group having 1-6 carbons, for example, a methyl group, i- and n-propyl group, or butyl group.

The compound that is especially desirable is the vinyl oxazolene shown in general formula: 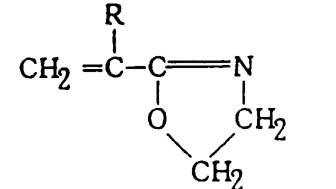 in this case, R is defined as above, and is preferably a hydrogen atom or a methyl group.

The above-mentioned solubilizers may be used independently, or in combinations of two or more.

The mixing ratio of the solubilizer (D) in the auxiliary recycling composition is 0-10 parts by weight for 100 parts by weight of the sum of (A) and (B), and a ratio of 0.01-10 parts by weight is preferable, 0.05-5 parts by weight is especially desirable, and a ratio of 0.1-2 parts by weight is ideal. When the mixing ratio of the solubilizer is too low, the solubilizing effect achieved is insignificant, and when too high, the heat-resistance of the recycled resin composition is reduced.

In addition to the above-mentioned components, standard additives, for example, pigments, dyes, reinforcing fibers (glass fibers, carbon fibers, etc.), fillers (carbon black, silica, titanium oxide, etc.), heat-resistant agents, antioxidants, weatherresistant agents, lubricants, releasing agents, crystal nucleating agents, plasticizers, flame retardants, flow property modifiers, antistatic agents, etc., can be further included in the auxiliary recycling composition in amounts that do not influence the target properties.

The above-mentioned auxiliary recycling composition can be produced by carrying out a hot-melt mixing of the above-mentioned components. Hot-melt mixing can be done by using a conventional process. For example, extruders, kneaders, Banbury mixers, etc., can be used as the kneading device. In particular, use of a multiaxial extruder is desirable. The hot-melt conditions used are not especially limited, and standard conditions commonly used for production of PPE/PA resin compositions can be used in this case as well. For example, a kneading temperature of 230-350°C, kneading time of 0.1-10 min, preferably, 0.3-5 min, may be used (when an extruder is used, the rotating speed is, for example, 50-500 rpm).

Furthermore, in the method of the present invention, the above-mentioned auxiliary recycling composition is mixed with the pulverized molded material with a coated film (that is, the material to be recycled) containing a resin composition comprised of a PPE resin and PA resin, and a hot-melt is made with the mixture. Pulverization of the molded material is done by the following method. The molded material is chopped into an appropriate size without removing the coated film (for example, a size less than 150 mm), then, put into a pulverizer to pulverize to a prescribed size. The pulverizer used in this case is not especially limited, and a conventional device can be used. The size of the pieces of molded material after being pulverized is not especially limited, but approximately less than 25 mm is suitable, preferably, less than approximately 15 mm.

The amount of the auxiliary recycling composition used is preferably 5-50 parts by weight for 100 parts by weight of the pulverized mold, and an amount of 10-40 parts by weight is especially desirable. When the mixing ratio of the auxiliary recycling composition is too low, the rigidity, heat resistance, flow properties (moldability) of the recycled resin composition becomes poor, and when too high, the cost increases, and the recycling efficiency drops off. The hot-melt for both components can be achieved by standard methods. For example, extruders, kneaders, Banbury mixers, etc., can be used as the mixing device. In particular, use of a multiaxial extruder is desirable. The hot-melt conditions used are not especially limited, and standard conditions commonly used for production of PPE/PA resin compositions can be used in this case, as well. For example, a kneading temperature of 230-350°C, kneading time of 0.1-10 min, preferably 0.3-5 min, may be used (when an extruder is used, the rotating speed is, for example, 50-500 rpm).

The recycled resin composition produced as described above has the initial properties of PPE/PA resin compositions, that is, high surface impact resistance, high tensile strength, excellent surface appearance, etc.

In the recycled resin composition of the present invention, in order to maintain the above-mentioned superior properties, it is desirable to include 80-40 parts by weight of PA for 20-60 parts by weight of the PPE as a whole, that is, as the sum of PPE and PA in the initial resin composition, and PPE and PA in the auxiliary recycling composition (added).

### Application examples

In the following, the present invention is further explained in detail with application examples, but the present invention is not limited to these.

### Synthesis Example 1 (preparation of the molded material to be recycled)

Baked finishing was carried out for a molded material (commonly used for exterior or bumpers of automobiles) comprised of a pellet containing Noryl GTX6006 (product name: product of Nippon G.E. Plastics (Ltd.), PPE (a composition comprised of poly(2,6-dimethyl-1,4-phenylene)ether) and PA6. Unimac primer (product name: product of Nippon Fats and Oils (Ltd.)) was coated to form a thickness of 5 µm as a conductive primer, KPX 36 gray (product name: product of Kansai Paint (Ltd.)) was further coated wet-on-wet to form a coated film thickness of 25 µm as the intermediate coat, then, baking at 140°C for 30 min. Neoaramic White (product name: product of Kansai Paint (Ltd.)) was further coated onto said coated film to form a thickness of 35 µm as a finishing coat; subsequently, baking was done at 140°C for 30 min.

The above-mentioned molded material was directly subjected to a pulverization process without removing the coated film. First, the molded material was cut to a size of less than approximately 150 mm; then, it was pulverized in a pulverizer (product of Hoki Steel Co. (Ltd.)) to produce a size of approximately less than 15 mm. The pulverized material produced was used for the application examples and comparative examples.

### Application Example 1 and Comparative Example 1

(1) Each component X or Y of the auxiliary composition shown in Table I were hot-melt extruded (primary hot-melt mixing) with a biaxial extruder with a vacuum vent at a temperature of 300°C and at a rotational speed of 450 rpm to produce a pellet.

**Table I**

| | Auxiliary recycling composition | |
|---|---|---|
| | X | Y |
| Each component (weight ratio) | | |
| Component (A): PPE Poly(2,6-dimethyl-1,4-phenylene)ether with an intrinsic viscosity [η] measured in a 25°C chloroform of 0.48 dL/g | 25 | 25 |
| Component (B): PA-1 Nylon 6 with a number-average molecular weight of 13,000, melting point of 220°C, and end amino group of 0.110 mEq | 35 | - |
| PA-2 Nylon 6 with a number-average molecular weight of 13,000, melting point of 220°C, and end amino group of 0.046 mEq | - | 35 |
| Component (C) KRATON G1651; trademark, product of Shell Chemicals, Hydrogenated styrenebutadiene block copolymer (SEBS) | 40 | 40 |

(2) 20 parts by weight of the pellet produced above (auxiliary recycling composition), and 80 parts by weight of the pulverized molded material produced in Synthesis Example 1 were mixed in a biaxial extruder with a vacuum vent at a temperature of 260°C and a rotating speed of 450 rpm to produce a pellet.
(3) The pellet produced above (auxiliary recycling composition) was used and a sample was produced with an injection molder at a cylinder temperature of 290°C, and a die temperature of 80°C, and the sample produced was evaluated with respect to the various properties described below. The results are shown in Table II.

### Izod impact strength

According to the method specified in ASTM D256, the Izod impact strength with 1/8-in notch was measured at room temperature (23°C) and low temperature (-30°C), and the form of the fracture was examined (whether a ductile fracture or brittle fracture).

### High-speed surface impact strength

A high-speed surface impact tester (HTM-1; trademark, product of Shimadzu Manufacturer Ltd.) was used. A square sheet measuring 50 mm x 50 mm (thickness 3.2 mm) was fastened onto a ring with an inside diameter of 25.4 mm, and the form of the fracture (whether ductile fracture or brittle fracture) when the sheet was punched out at a speed of 5 m/sec by a metal punch with a semicircular end with a diameter of 12.7 mm was examined. The measurement was carried out at room temperature (23°C) and a low temperature (-30°C).

### Tensile strength

According to the method specified in ASTM D 638, the tensile strength and tensile fracture point elongation were measured.

(4) Subsequently, the coating finish described in Synthetic Example 1 was carried out for the mold cut to form a square sheet of 50 mm x 50 mm (thickness 3.2 mm), a high-speed surface impact strength test was carried out for the molded product after coating, and the surface appearance of the molded product was evaluated visually (○ for good surface appearance, x for poor surface appearance). The results obtained are shown in Table II.

### Reference Example 1

The original pellet of Noryl GTX6006 was used, and injection molding was carried out under the same conditions used in Application Example 1 to produce a sample piece, and the sample was subjected to the same tests described in Application Example 1. The results are shown in Table II.

### Comparative Example 2

The pulverized material of the coated mold produced in Synthetic Example 1 alone was used, and an injection molding was carried out under the same conditions used in Application Example 1 to produce a sample, and the sample was subjected to the same tests described in Application Example 1. The results are shown in Table II.

### Comparative Example 3

The pulverized material of the coated mold produced in Synthetic Example 1 was extruded from a biaxial extruder with a vacuum vent at a temperature of 260°C and rotating speed of 450 rpm to produce a pellet. Injection molding of the pellet was carried out under the same conditions used in Application Example 1 to produce a sample; the sample was subjected to the same tests described in Application Example 1. The results are shown in Table II.

**Table II**

| | Application Example 1 | Reference Example 1 | Comparative Examples | | |
|---|---|---|---|---|---|
| | | | 1 | 2 | 3 |
| Recycled resin composition mixing components (parts by weight) | | | | | |
| auxiliary recycling composition | | | | | |
| X | 20 | -- | -- | -- | -- |
| Y | -- | -- | 20 | -- | -- |
| Pulverized GTX6006 molding (with coated film) (produced in Synthesis Example 1) | 80 | - | 80 | 100 | 100 |
| GTX6006 original pellet | -- | 100 | -- | -- | -- |
| Extrusion process | Stage 2 | Stage 1 | Stage 2 | None | Stage 1 |
| Properties of recycled resin composition mold | | | | | |
| Izod impact strength (kg·cm/cm) | | | | | |
| 23°C | 77 | 82 | 42 | 21 | 30 |
| -30°C | 50 | 55 | 13 | 5 | 10 |
| Form of fracture | D | D | B | B | B |
| High-speed impact strength (form of fracture) | | | | | |
| 23°C | D | D | D | B | D |
| -30°C | D | D | B | B | B |
| Tensile strength (kg/cm²) | 450 | 460 | 415 | 390 | 410 |
| Tensile elongation rupture point (%) | 110 | 120 | 83 | 9 | 23 |
| Properties of the coated molding comprised of the recycled resin composition | | | | | |
| High-speed surface impact strength (form of fracture) | | | | | |
| -30°C | D | D | B | B | B |
| Surface appearance | O | O | O | X | O |
| Notes: D = Ductile fracture B = Brittle fracture | | | | | |

As shown in Table II, the molded product of the recycled resin composition of Application Example 1 had nearly the same properties as in the molded product of the original resin composition of Reference Example 1. On the other hand, in Comparative Example 1 where the auxiliary recycling composition outside of the range of the present invention was used, the impact resistance and tensile strength were inadequate, as is shown. In Comparative Example 3, in which the auxiliary recycling composition was not included at all, the impact resistance and tensile strength were quite poor. Furthermore, in Comparative Example 2, in which the auxiliary recycling composition was not included, and repeated extrusion (hot-melt mixing) of the pulverized material is not carried out, inferior surface appearance after coating of the recycled molding as a result of the residual paint pieces is observed since the coated film was not cut.

### Effect of the invention

According to the method of the present invention, it is possible to produce a recycled resin composition having initial superior properties of the resin composition easily and without removing the coated film on molded material comprised of a coated PPE/PA resin composition. The recycled resin composition produced can be effectively used in applications where the above-mentioned original resin composition is commonly used, for example, exteriors, bumpers, wheel covers, etc., of automobiles.

Therefore, plastic scraps produced from automobiles, electric and electronic machines can be used effectively as a recyclable material, and as a result, contribution to the effective use of resources and reduction of industrial waste disposal is significant. The present invention is very useful industrially and socially.

## Claims

1. A method of manufacturing a recycled resin composition comprising a pulverized molded material having a coated film, wherein the pulverized molded material comprises a polyphenylene ether resin and polyamide resin, comprising subjecting the pulverized molded material having a coated film and an auxiliary recycling composition to hot melt mixing, without removing the coated film from the pulverized molded material, wherein the auxiliary recycling composition comprises:
(A) 10-80 parts by weight of polyphenylene ether resin;
(B) 90-20 parts by weight of a polyamide resin having greater than 0.05 mEq/g of end amino group, and
(C) 25-75 parts by weight of per 100 parts by weight of the sum of (A) and (B) of a rubber-like polymer selected from natural rubbers, butadiene polymers, hydroxy or carboxy end- modified polybutadiene, styreneisoprene copolymers, partially hydrogenated styreneisoprene block copolymer, butadienestyrene copolymers, partially hydrogenated styrenebutadiene block copolymer, isoprene polymers, chlorobutadiene polymers, butadieneacrylonitrile copolymers, isobutylene polymers, isobutylenebutadiene copolymers, isobutyleneisoprene copolymers, acrylate polymers, ethylenepropylene copolymers, ethylenepropylenediene copolymers, polysulfide rubbers, polyurethane rubbers and polyether rubbers.

2. The method according to claim 1, in which the end amino group in polyamide of the component (B) is greater than 0.07 mEq.

3. The method described in claim 1 or claim 2, in which 5-50 parts by weight of auxiliary recycling composition are mixed per 100 parts by weight of the pulverized molded material.

4. The method according to claim 1 wherein the elastomer is hydrogenated styrene butadiene block copolymer.

## Patentansprüche

1. Verfahren zur Herstellung einer rezyklierten Harzzusammensetzung, die ein pulverisiertes geformtes Material aufweist, das einen Beschichtungsfilm aufweist, wobei das pulverisierte geformte Material ein Polyphenylenetherharz und Polyamidharz aufweist, bei welchem Verfahren man das pulverisierte geformte Material, das einen Beschichtungsfilm aufweist, und eine Hilfsrezyklierzusammensetzung einem Mischen in heißer Schmelze unterwirft, ohne den Beschichtungsfilm vom pulverisierten geformten Material zu entfernen, wobei die Hilfsrezyklierzusammensetzung aufweist:
(A) 10 - 80 Gewichtsteile eines Polyphenylenetherharzes;
(B) 90 - 20 Gewichtsteile eines Polyamidharzes mit mehr als 0,05 mEq/g entständiger Aminogruppen, und
(C) 25 - 75 Gewichtsteile pro 100 Gewichtsteile der Summe von (A) und (B) eines kautschuk-ähnlichen Polymers ausgewählt aus Naturkautschuken, Butadienpolymeren, hydroxy- oder carboxyendmodifizierten Polybutadienen, Styrolisoprencopolymeren, partiell hydrierten Styrolisoprenblockcopolymeren, Butadien-Styrolcopolymeren, partiell hydrierten Styrol-Butadienblockcopolymeren, Isoprenpolymeren, Chlorbutadienpolymeren, Butadien-Acrylnitrilcopolymeren, Isobutylenpolymeren, Isobutylen-Butadiencopolymeren, Isobutylen-Isoprencopolymeren, Acrylatpolymeren, Ethylen-Propylencopolymeren, Ethylen-Propylen-Diencopolymeren, Polysulfidkautschuken, Polyurethankautschuken und Polyetherkautschuken.

2. Verfahren nach Anspruch 1, dadurch gekennzeichnet, daß die entständigen Aminogruppen im Polyamid der Komponente (B) größer als 0,07 mEq sind.

3. Verfahren nach Anspruch 1 oder 2, dadurch gekennzeichnet, daß man 5 bis 50 Gewichtsteile der Hilfsrezyklierzusammensetzung pro 100 Gewichtsteile des pulverisierten geformten Materials mischt.

4. Verfahren nach Anspruch 1, dadurch gekennzeichnet, daß das Elastomer hydriertes Styrol-Butadienblockcopolymer ist.

## Revendications

1. Procédé de fabrication d'une composition de résine recyclée qui comprend un matériau moulé pulvérisé présentant un film revêtu et comprenant une résine poly(phénylène éther) et une résine polyamide, lequel procédé comprend le fait de soumettre le matériau moulé pulvérisé présentant un film revêtu et une composition auxiliaire de recyclage à un malaxage à l'état fondu sans éliminer le film revêtu du matériau moulé pulvérisé, dans lequel la composition auxiliaire de recyclage comprend :
(A) de 10 à 80 parties en poids de résine poly(phénylène éther) ;
(B) de 90 à 20 parties en poids d'une résine polyamide présentant une teneur en groupe terminal amino supérieure à 0,05 méq/g, et
(C) de 25 à 75 parties en poids, pour 100 parties en poids de la somme de (A) et (B), d'un polymère de type caoutchouc choisi parmi les caoutchoucs naturels, les polybutadiènes, les polybutadiènes à groupes terminaux modifiés hydroxy ou carboxy, les copolymères styrène/isoprène, les copolymères séquencés styrène/isoprène partiellement hydrogénés, les copolymères butadiène/styrène, les copolymères séquencés butadiène/styrène partiellement hydrogénés, les polymères d'isoprène, les polymères de chlorobutadiène, les copolymères butadiène/acrylonitrile, les polymères d'isobutylène, les copolymères isobutylène/butadiène, les copolymères isobutylène/isoprène, les polymères d'acrylate, les copolymères éthylène/propylène, les copolymères éthylène/propylène/diène, les caoutchoucs polysulfures, les caoutchoucs polyuréthanes et les caoutchoucs polyéthers.

2. Procédé selon la revendication 1, dans lequel la teneur en groupe terminal amino dans le polyamide du composant (B) est supérieur à 0,07 méq/g.

3. Procédé selon la revendication 1 ou 2, dans lequel on mélange de 5 à 50 parties en poids de la composition auxiliaire de recyclage pour 100 parties en poids du matériau moulé pulvérisé.

4. Procédé selon la revendication 1, dans lequel l'élastomère est un copolymère séquencé styrène/butadiène hydrogéné.
